# EUROPEAN PATENT APPLICATION

(11) **EP 4 759 155 A1**
(43) Date of publication of application: **17.06.2026**
(21) Application number: 24852162.7
(22) Date of filing: 30.07.2024
(51) Int. Cl.: A24F 40/42, A24F 40/46, C08L 67/02, C08L 25/06, C08L 25/12, C08L 33/12, C08L 9/00

(54) **VAPORIZER AND AEROSOL-GENERATING APPARATUS INCLUDING SAME**

(30) Priority: 08.08.2023 KR 20230103651
(71) Applicant: KT&G Corporation, Daedeok-gu Daejeon 34337 (KR)
(72) Inventor: SHIN, Youn Ji, Seoul 05022 (KR); KIM, Tae Hun, Yongin-si, Gyeonggi-do 16925 (KR); YOON, Sung Wook, Suwon-si, Gyeonggi-do 16534 (KR); PARK, Ju Eon, Seongnam-si, Gyeonggi-do 13597 (KR); LIM, Hun Il, Seoul 05555 (KR); JUNG, Hyung Jin, Seoul 06993 (KR)
(74) Representative: AWA Sweden AB
(86) International application number: PCT/KR2024/011090
(87) International publication number: WO 2025/033806

(57) **Abstract**

A vaporizer according to an embodiment includes a storage portion storing an aerosol-generating material and a heating element configured to heat the aerosol-generating material, wherein the storage portion includes a plastic including a polymer resin and a stability-enhancing material.

## Description

### Technical Field

Embodiments relate to a vaporizer and an aerosol-generating apparatus including the same. More specifically, the embodiments relate to a vaporizer capable of stably accommodating therein an aerosol-generating material.

### Background Art

Recently, the demand for alternative methods to overcome the disadvantages of traditional cigarettes has increased. For example, there is a growing demand for systems that generate aerosols by heating cigarettes or aerosol-generating materials using an aerosol-generating device, rather than by burning cigarettes to generate the aerosol. Accordingly, researches on a heating-type aerosol generating device have been actively conducted.

An aerosol-generating apparatus for generating an aerosol by heating a liquid aerosol-generating material may include a vaporizer for storing the liquid aerosol-generating material. The vaporizer may be formed in a single body with a body of the aerosol-generating apparatus or may be detachably coupled thereto.

### Disclosure of Invention

### Technical Problem

Vaporizers require chemical and structural stability to enable long-term storage of aerosol-generating materials. When a vaporizer is deformed due to the external temperature and/or light conditions or reacts with an aerosol-generating material during the storage period of the aerosol-generating material, the quality of the aerosol-generating material may be adversely affected.

The technical problems of the present disclosure are not limited to the above-described description, and other technical problems may be clearly understood by one of ordinary skill in the art from the embodiments to be described hereinafter.

### Solution to Problem

A vaporizer according to an embodiment includes a storage portion storing an aerosol-generating material and a heating element configured to heat the aerosol-generating material, wherein the storage portion includes a plastic including a polymer resin and a stability-enhancing material.

An aerosol-generating apparatus according to another embodiment includes a storage portion storing an aerosol-generating material, a vaporizer including a heating element configured to heat the aerosol-generating material, and a controller configured to control power supplied to the heating element, wherein the storage portion includes a plastic including a polymer resin and a stability-enhancing material.

The means for solving the problem are not limited to those described above, and may include all matters that may be inferred by a person skilled in the art from the entire specification.

### Advantageous Effects of Invention

A vaporizer according to an embodiment has enhanced chemical structural stability, which may prevent the quality of a received aerosol-generating material from deteriorating and enable long-term storage of the aerosol-generating material.

The effects of the embodiments are not limited to those described above, and may include all effects that may be inferred from the configuration described below.

### Brief Description of Drawings

FIG. 1 is a front view of an aerosol-generating apparatus to which a vaporizer according to an embodiment is coupled.
FIG. 2 is an exploded perspective view of the vaporizer illustrated in FIG. 1.
FIG. 3 is a bottom perspective view of the vaporizer illustrated in FIG. 1.
FIGS. 4 and 5 are diagrams showing examples in which an aerosol generating article is inserted into an aerosol generating device.
FIGS. 6 and 7 illustrate examples of the aerosol generating article.
FIG. 8 is a block diagram of an aerosol generating device according to another embodiment.

### Best Mode for Carrying out the Invention

A vaporizer according to an embodiment includes a storage portion storing an aerosol-generating material and a heating element configured to heat the aerosol-generating material, wherein the storage portion includes a plastic including a polymer resin and a stability-enhancing material.

The polymer resin may include at least one polymer resin selected from the group consisting of PCTG (polycyclohexylenedimethylene terephthalate glycol), PETG (polyethylene glycol-co-1,4-cyclohexanedimethanol terephthalate), SAN (styrene-acrylonitrile), PMMA (poly(methyl methacrylate)), and PS (polystyrene).

The stability-enhancing material may include polybutadiene.

The polybutadiene may have 70% or more of monomer units thereof having a 1,2-structure.

The plastic may include 0.1 to 5 wt% of the stability-enhancing material based on the total weight of the plastic.

The plastic may further include biomass.

The aerosol-generating material may further include a fragrance.

An aerosol-generating apparatus according to another embodiment includes a storage portion storing an aerosol-generating material, a vaporizer including a heating element configured to heat the aerosol-generating material, and a controller configured to control power supplied to the heating element, wherein the storage portion includes a plastic including a polymer resin and a stability-enhancing material.

The aerosol-generating apparatus may further include a housing including a space accommodating an aerosol-generating article, and a heater configured to heat the aerosol-generating article accommodated in the housing.

The plastic may include at least one plastic selected from the group consisting of PCTG (polycyclohexylenedimethylene terephthalate glycol), PETG (polyethylene glycol-co-1,4-cyclohexanedimethanol terephthalate), SAN (styrene-acrylonitrile), PMMA (poly(methyl methacrylate)), and PS (polystyrene).

The stability-enhancing material may include polybutadiene.

The polybutadiene may have 70% or more of monomer units thereof having a 1,2-structure.

The plastic may include 0.1 to 5 wt% of the stability-enhancing material based on the total weight of the plastic.

The plastic may further include biomass.

The aerosol-generating material may further include a fragrance.

### Mode for the Invention

With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

In the present description, terms including ordinal numbers such as "first", "second", etc. are used to describe various elements but the elements should not be defined by these terms. The terms are used only to distinguish one element from another element.

Additionally, some elements in the drawing may be somewhat exaggerated in size or proportion. Additionally, elements depicted in one drawing may not be depicted in another drawing.

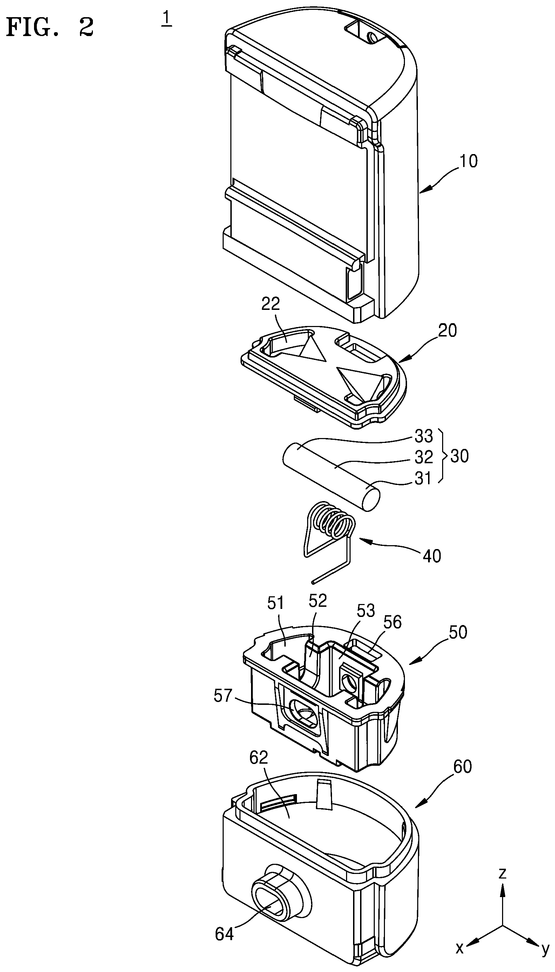

Additionally, throughout the specification, the "longitudinal direction" of an element may refer to a direction in which the element extends along one directional axis of the element, wherein the one directional axis of the element may refer to a direction in which the element extends longer than the other directional axis transverse to the one directional axis. For example, the longitudinal direction of a wick may mean a direction parallel to a direction in which the wick extends as illustrated in FIG. 2.

Throughout the specification, an "aerosol-generating apparatus" may be an apparatus that generates an aerosol using an aerosol-generating material to generate an aerosol that is directly inhalable into a user's lungs through the user's mouth.

Throughout the specification, an "aerosol-generating article" means an article used in smoking. For example, the aerosol-generating article may be a combustion cigarette, which is used in a manner that it is ignited and combusted, or it may be a heated cigarette, which is used in a manner that it is heated by an aerosol generating apparatus.

Throughout the specification, "puff" refers to inhalation by the user. Inhalation may refer to situations where an aerosol is drawn into the user's mouth, nasal cavity, or lungs through the user's mouth or nose.

Throughout the specification, the term "embodiment" is an arbitrary distinction used to facilitate the description of present disclosure, and each embodiment is not necessarily exclusive of the others. For example, configurations disclosed in an embodiment may be applied and/or implemented in other embodiments, and may be applied and/or implemented with modifications, without departing from the scope of the present disclosure.

Additionally, the terminology used in the present disclosure is for the purpose of describing embodiments and is not intended to limit the embodiments. In the present disclosure, singular forms also include plural forms unless specifically stated otherwise.

Hereinafter, the present disclosure will now be described more fully with reference to the accompanying drawings, in which exemplary embodiments of the present disclosure are shown such that one of ordinary skill in the art may easily work the present disclosure. The disclosure may, however, be embodied in many different forms and should not be construed as being limited to the embodiments set forth herein.

Hereinafter, an aerosol-generating apparatus according to an embodiment will be described with reference to the drawings.

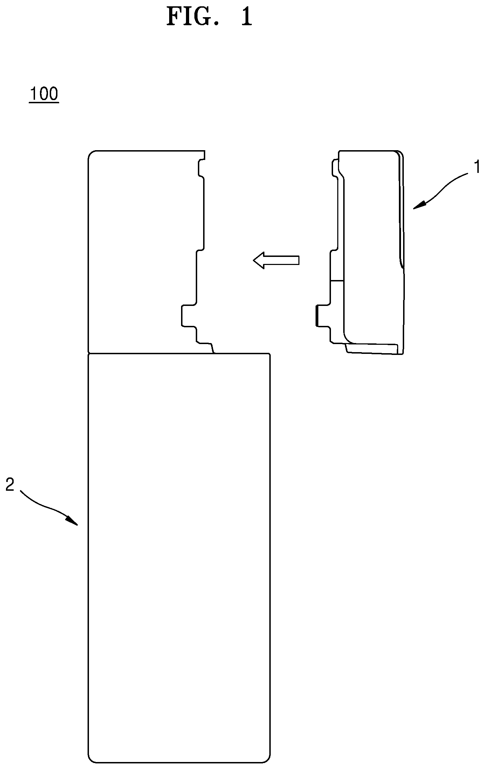

FIG. 1 is a front view of an aerosol-generating apparatus to which a vaporizer according to an embodiment is coupled.

Referring to FIG. 1, a vaporizer 1 and a main body 2 according to an embodiment may be coupled to each other to operate as an aerosol-generating apparatus 100. For example, the vaporizer 1 may be coupled to one area of the main body 2. A direction in which the vaporizer 1 is coupled is not limited to the illustrated example, and the vaporizer 1 may be coupled to the main body 2 in a longitudinal direction of the aerosol-generating apparatus 100.

In an embodiment, the aerosol-generating apparatus 100 may include a processor (not shown) and a battery (not shown). The battery and the processor may be electrically connected to the vaporizer 1. For example, the battery and the processor may supply power to and control the vaporizer 1. Accordingly, the aerosol-generating apparatus 100 may generate an aerosol by heating an aerosol-generating material stored in the vaporizer 1 in a liquid or gel state.

In another embodiment, the aerosol-generating apparatus 100 may further include a housing including a space (not shown) in which an aerosol-generating article is accommodated, and a separate heater (not shown) for heating the aerosol-generating article accommodated in the housing.

For example, the space in which the aerosol-generating article is accommodated and the heater may be located in the main body 2. The vaporizer 1 may be coupled to one area of the main body 2, and an aerosol-generating article may be inserted into another area of the main body 2.

The aerosol-generating apparatus 100 may generate an aerosol not only by using the vaporizer 1, but also by using an inserted aerosol-generating article. Accordingly, a hybrid type aerosol-generating apparatus 100 may be implemented.

In another embodiment, the aerosol-generating apparatus 100 may further include a detachable cap (not shown) for protecting at least a portion of the main body 2 and the vaporizer 1 coupled to the main body 2. The detachable cap may be coupled to one end of the aerosol-generating apparatus 100 to which the vaporizer 1 and the main body 2 are coupled. For example, the detachable cap may be separated/coupled from or to the main body 2 when replacing the vaporizer 1.

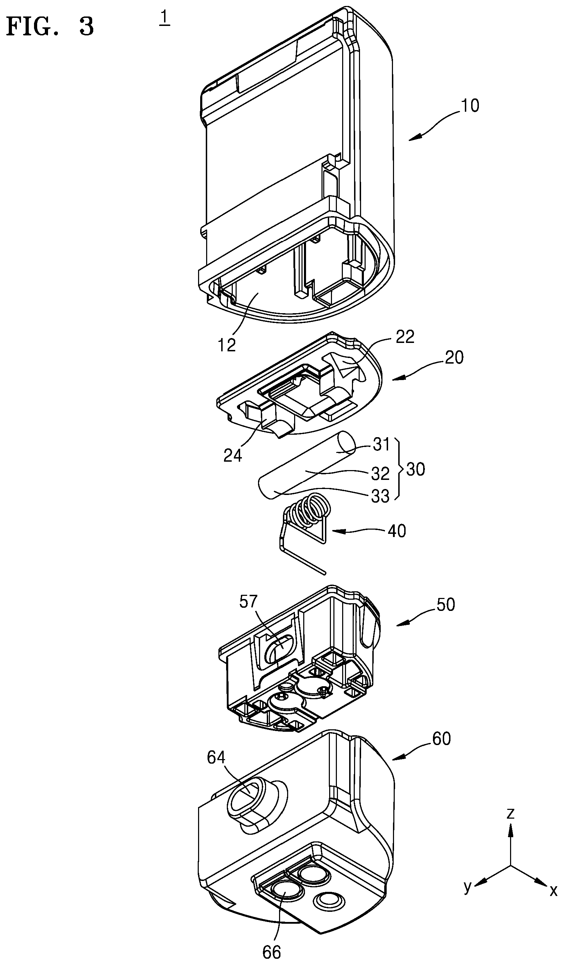

FIG. 2 is an exploded perspective view of the vaporizer 1 illustrated in FIG. 1, and FIG. 3 is a bottom perspective view of the vaporizer 1 illustrated in FIG. 1.

Referring to FIGS. 2 and 3, the vaporizer 1 according to an embodiment may include a storage portion 10, a sealing portion 20, a wick 30, a heating element 40, a receiving portion 50, and a cover 60. The storage portion 10, the sealing portion 20, the wick 30, the heating element 40, the receiving portion 50 and the cover 60 may be coupled in a z-axis direction as shown.

For example, after the heating element 40 and the wick 30 are accommodated in the receiving portion 50, the receiving portion 50 may be inserted into the cover 60, and the sealing portion 20 may come into contact with or be coupled to the receiving portion 50. Accordingly, the sealing portion 20 and the receiving portion 50 may be located within the cover 60. Finally, the storage portion 10 and the cover 60 may be coupled to each other to assemble the vaporizer 1. However, the assembly order and coupling method of the vaporizer 1 are not limited to the example described above.

The storage portion 10 may store an aerosol-generating material. The storage portion 10 may store an aerosol-generating material in a liquid state or an aerosol-generating material in a gel state. The aerosol-generating material stored in the storage portion 10 may be transferred to the wick 30 and absorbed by the wick 30, and the aerosol-generating material absorbed by the wick 30 may be heated by the heating element 40 and changed into an aerosol.

At least one area of the storage portion 10 may be opened. For example, at least a portion of a lower surface or a bottom surface of the storage portion 10 may be opened such that an aerosol-generating material may easily move out of the storage portion 10 by the action of gravity.

In an embodiment, the storage portion 10 may be coupled to the sealing portion 20 that prevents leakage of the aerosol-generating material. The sealing portion 20 may be coupled to at least one area of the storage portion 10 (e.g., an open surface of the storage portion 10) to form the storage space 12 capable of accommodating an aerosol-generating material together with the storage portion 10.

The sealing portion 20 may be manufactured from a material that may be tightly coupled to a portion of the storage portion 10. For example, the sealing portion 20 may include an elastic material such as rubber or silicone, but is not limited thereto.

The sealing portion 20 may be tightly coupled to an area of the storage portion 10 where the internal storage space 12 of the storage portion 10 is exposed, thereby preventing the aerosol-generating material from leaking. Here, the meaning of 'tightly coupled' may mean that the sealing portion 20 is firmly coupled to the storage portion 10 so that there is no gap between the storage portion 10 and another component (e.g., between the storage portion 10 and the receiving portion 50) through which the aerosol-generating material leaks.

Meanwhile, the sealing portion 20 may be manufactured to be coupled/separated to or from the storage portion 10, or may be manufactured in a single body with the storage portion 10.

In order to allow the aerosol-generating material stored in the storage portion 10 to move to the outside of the storage portion 10 while the storage portion 10 and the sealing portion 20 are coupled to each other, the sealing portion 20 may include at least one opening 22.

For example, an inner surface of the storage space 12 of the storage portion 10 may be exposed to the outside through an open area, but the sealing portion 20 including the opening 22 may be coupled to an area of the storage portion 10. Accordingly, the aerosol-generating material stored in the storage space 12 of the storage portion 10 may move to the outside of the storage portion 10 through the opening 22 formed in the sealing portion 20, and the aerosol-generating material stored in the storage portion 10 may be prevented from leaking to the outside of the storage portion 10 through a gap other than the opening 22.

The wick 30 may receive an aerosol-generating material supplied from the storage portion 10 and absorb the aerosol-generating material. The wick 30 may have an elongated shape. For example, the wick 30 may have a columnar shape extending in one direction. Specifically, the wick 30 may have a polygonal prism shape such as a cylinder, a square prism, a triangular prism, etc., but is not limited to the examples described above, and the wick 30 may have a roughly rod-shaped, needle-shaped, or flat shape.

The wick 30 may absorb, through a portion thereof, an aerosol-generating material supplied from the storage portion 10. For example, an aerosol-generating material absorbed into one portion of the wick 30 may move to another portion of the wick 30 by capillary action. The wick 30 may include various types of materials. For example, the wick 30 may include at least one of cotton, ceramic, and glass fiber.

In an embodiment, the wick 30 may include a first end 31, a second end 33, and a center portion 32 between the first end 31 and the second end 33. The aerosol-generating material supplied from the storage portion 10 may be absorbed into the wick 30 through the first end 31 and the second end 33. The aerosol-generating material absorbed into the wick 30 may move to the center portion 32 of the wick 30.

The heating element 40 may heat the aerosol-generating material absorbed in the wick 30 to generate an aerosol. The heating element 40 may be positioned adjacent to the wick 30. The heating element 40 may generate an aerosol by heating a liquid aerosol-generating material delivered to the center portion 32 of the wick 30.

For example, the heating element 40 may be a coil-shaped resistive heater wound around an outer surface of the center portion 32 of the wick 30. As another example, the heating element 40 may be a resistive heater printed on the center portion 32 of the wick 30. The heating element 40 is not limited to the examples described above, and the heating element 40 may be a porous element formed in a single body with the wick 30.

The receiving portion 50 may include receiving spaces 51, 52, 53 that receive the wick 30 and the heating element 40. For example, the receiving portion 50 may include at least one support recess 52 that supports at least a portion of the wick 30, at least one storage groove 51 that temporarily stores an aerosol-generating material to deliver the aerosol-generating material to the wick 30, and a central space 53 that accommodates the center portion 32 of the wick 30.

The receiving portion 50 forms a cavity together with at least a portion of the sealing portion 20, and at least a portion of the wick 30 may be positioned in the cavity. The cavity is a space surrounded by the receiving portion 50 and the sealing portion 20, and may mean a space where at least a portion of the wick 30 is located. For example, the center portion 32 of the wick 30 around which the heating element 40 is wound may be positioned in a cavity, and thus an aerosol may be generated in the cavity.

Meanwhile, outside air may be introduced into the receiving portion 50 through an inlet 56 included in at least a portion of the receiving portion 50, and aerosol generated in the cavity may be discharged to the outside of the receiving portion 50 through a discharge port 57 included in at least a portion of the receiving portion 50.

The cover 60 may be coupled to the receiving portion 50 and the sealing portion 20. The cover 60 may include an inner space 62 in which the receiving portion 50 and the sealing portion 20 may be arranged. For example, the cover 60 may include the inner space 62 having a shape corresponding to the outer shape of the receiving portion 50 and the sealing portion 20. The receiving portion 50 and the sealing portion 20 arranged in the inner space 62 of the cover 60 may be properly aligned with each other, and may be surrounded by the cover 60 and protected from external impact.

The cover 60 may include a connecting passage 64 that guides aerosol discharged from the discharge port 57 of the receiving portion 50 to the outside of the vaporizer 1. For example, when the receiving portion 50 is arranged in the inner space 62 of the cover 60, the connecting passage 64 is positioned at a position corresponding to the discharge port 57, so that the discharge port 57 may be connected to the connecting passage 64. Aerosol discharged to the outside of the receiving portion 50 through the discharge port 57 may move to the outside of the vaporizer 1 along the connecting passage 64.

For example, the connecting passage 64 may be connected to the main body 2 of the aerosol-generating apparatus 100. The aerosol discharged to the outside of the receiving portion 50 through the discharge port 57 may move to the main body 2 of the aerosol-generating apparatus 100 through the connecting passage 64 and be discharged to the outside of the aerosol-generating apparatus 100 along the airflow passage formed in the main body 2.

The cover 60 may include a connection terminal 66 that electrically connects the vaporizer 1 and the main body 2. For example, the connection terminal 66 may be connected to the heating element 40 and mediate the connection between a battery and a processor included in the main body 2 and the heating element 40. Accordingly, the heating element 40 may receive power from and controlled by the battery and the processor.

The storage portion 10 may include a plastic including a polymer resin and a stability-enhancing material. For example, the storage portion 10 may be formed of a plastic including a polymer resin and a stability-enhancing material. Polymer resin may refer to the main material included in plastic and may determine the basic properties of plastic.

For example, the polymer resin may include at least one polymer resin selected from the group consisting of PCTG (polycyclohexylenedimethylene terephthalate glycol), PETG (polyethylene glycol-co-1,4-cyclohexanedimethanol terephthalate), SAN (styrene-acrylonitrile), PMMA (poly(methyl methacrylate)), and PS (polystyrene), but is not limited thereto. Here, PS may include GPPS (general purpose polystyrene) and/or HIPS (high impact polystyrene). The polymer resin may be transparent so that the remaining amount of aerosol-generating material stored in the storage portion 10 may be checked. In addition, when heating an aerosol-generating material, the polymer resin may have thermal stability to withstand the heat generated and robustness to withstand external impact.

The stability-enhancing material may be mixed with a polymer resin to enhance the chemical structural stability of plastic. The storage portion 10 is to have chemical structural stability to enable long-term storage of aerosol-generating materials. If the storage portion 10 is deformed due to external temperature and/or light conditions or reacts with the stored aerosol-generating material during the storage period, this may have a negative effect on the quality of the aerosol-generating material. The stability-enhancing material may be mixed with a polymer resin to enhance the chemical structural stability of the plastic, thereby preventing deterioration of the quality of aerosol-generating material over time.

For example, the stability-enhancing material may include polybutadiene. Polybutadiene may be mixed with the above-described type of polymer resin to enhance the stability of the chemical structure of the polymer resin, thereby preventing deformation of the chemical structure that may occur due to external temperature and/or light conditions. In addition, the reaction between the polymer resin and the aerosol-generating material may be suppressed, thereby maintaining the quality of the aerosol-generating material during the storage period.

Polybutadiene may include 70% or more of monomer units thereof having a 1,2-structure. When the polymer resin includes polybutadiene having a 1,2-structure for about 70% or more of the monomer units, stable storage is possible regardless of the properties (e.g., polarity, volatility, etc.) of the fragrance included in the aerosol-generating material, in addition to the effects described above. For example, polybutadiene may have, but is not limited to, about 80% or more of monomer units thereof having a 1,2-structure, or about 90% or more of monomer units thereof having a 1,2-structure.

The stability-enhancing material may be included in an amount of about 0.1 wt% to about 5 wt% based on the total weight of the plastic. The stability-enhancing material may enhance the stability of the chemical structure of the plastic while providing transparency in a range of about 0.1 wt% to about 5 wt%. If the stability-enhancing material is included in an amount of less than about 0.1 wt% based on the total weight of the plastic, the effect of enhancing the stability of the plastic may be insufficient. If the stability-enhancing material exceeds about 5 wt% based on the total weight of the plastic, the transparency of the plastic may be insufficient. Additionally, the stability-enhancing material may be included in an amount of about 0.5 wt % to about 3 wt %, or about 0.7 wt % to about 2 wt %, based on the total weight of the plastic.

Plastic may further include biomass. Biomass may be included in plastic to improve degradability during the disposal process of the vaporizer 1 that is used up. For example, the biomass may be, but is not limited to, lignocellulosic biomass.

The plastic may include from about 0.01 wt% to about 5 wt% biomass, based on the total weight of the plastic. Biomass may improve the degradability during the disposal process without damaging the stability of the chemical structure of the plastic in the range of about 0.01 wt% to about 5 wt%. When biomass is included in less than about 0.01 wt% of the total weight of the plastic, degradability may be insufficient during a disposal process of the plastic. When biomass exceeds about 5 wt% of the total weight of the plastic, the stability of the chemical structure of the plastic may be compromised. Additionally, biomass may be included in an amount of from about 0.1 wt % to about 3 wt %, or from about 0.5 wt % to about 1 wt %, based on the total weight of the plastic.

The aerosol-generating material may further include a fragrance. The plastic included in the storage portion 10 of the vaporizer 1 according to the embodiment has excellent stability and enables stable storage regardless of the properties of the fragrance (e.g., polarity, volatility, etc.).

The cover 60 may include the same plastic as the storage portion 10. When the cover 60 includes the same material as the storage portion 10, the coupling strength between the cover 60 and the storage portion 10 may be improved. For example, the plastic may include PCTG as a polymer resin and polybutadiene as a stability-enhancing material in an amount of about 1 wt% based on the total weight of the polymer resin, and the cover 60 and the storage portion 10 may be formed of the same plastic. However, the plastic included in the cover 60 and the storage portion 10 is not limited thereto, and the polymer resins and the stability-enhancing materials described above may be applied without limitation.

Additionally, components of the vaporizer 1 other than the cover 60 and the storage portion 10 may also include the same plastic. For example, the storage portion 10, cover 60, sealing portion 20 and receiving unit 50 may include the same plastic, but are not limited thereto.

### Experimental Example 1: Analysis of chemical structural stability

Plastic was manufactured by varying the type of polymer resin (PCTG, SAN, PMMA, GPPS) and the content of a polymer resin and a stability-enhancing material. Polybutadiene, in which 90% or more of monomer units thereof have a 1,2-structure, was used as the stability-enhancing material.

To identify the chemical structural stability of the manufactured plastic, the amount of gas captured was analyzed using thermal desorption gas chromatography. Thermal desorption pretreatment was performed at a heating temperature of 200 °C, and the generated gas was captured for 60 minutes. If the amount of captured gas was equal to or below the standard, it was marked as "O", or exceeded the standard, it was marked as "X", and the results are shown in Table 1 below.

### Experimental Example 2: Stability analysis of aerosol-generating materials

A vaporizer was manufactured using the plastic manufactured in Experimental Example 1. An aerosol-generating material including 100 wt% glycerin was stored in a storage portion of the vaporizer.

To analyze the stability of glycerin stored in the vaporizer, the viscosity of glycerin was measured after leaving the vaporizer at room temperature for 4 weeks. If a difference between the measured viscosity and the initial viscosity is equal to or below the standard, it is indicated as "O", and exceeds the standard, it is indicated as "X", and the results are shown in Table 1 below.

**[Table 1]**

| olymer resin | Polymer resin content (weight%) | Content of stability-enhancing material (weight%) | Chemical structural stability | glycerin Stability |
|---|---|---|---|---|
| PCTG | 100 | 0 | X | X |
| PCTG | 99 | 1 | O | O |
| PCTG | 95 | 5 | O | X |
| SAN | 100 | 0 | X | X |
| SAN | 99 | 1 | O | O |
| SAN | 95 | 5 | O | X |
| PMMA | 100 | 0 | X | X |
| PMMA | 99 | 1 | O | O |
| PMMA | 95 | 5 | O | X |
| GPPS | 100 | 0 | X | X |
| GPPS | 99 | 1 | O | O |
| GPPS | 95 | 5 | O | X |

Referring to Table 1, it was confirmed that the plastic including the stability-enhancing material had enhanced structural stability compared to plastic without a stability-enhancing material. In addition, it was confirmed that the stability of glycerin stored in the vaporizer was enhanced in the case of plastic including 1 wt% of a stability-enhancing material compared to a plastic without a stability-enhancing material. Meanwhile, in the case of plastic including 5 wt% of a stability-enhancing material, the stability-enhancing effect of glycerin stored in the vaporizer could not be confirmed, similar to the plastic without a stability-enhancing material. The inherent properties of the stability-enhancing material are expected to have strengthened as the content of the stability-enhancing material increases.

### Experimental Example 3: analysis of the stability of fragrances

A vaporizer was manufactured using a plastic including 99 wt% PCTG and 1 wt% polybutadiene, and glycerin including a fragrance was stored in a storage portion of the vaporizer. As polybutadiene, polybutadiene having 70% or more of monomer units thereof having a 1,2-structure and polybutadiene having less than 70% of monomer units thereof having a 1,2-structure were used. To analyze the stability of fragrance stored in the vaporizer, the vaporizer was left at room temperature for 4 weeks and then a sensory evaluation was conducted. The sensory evaluation was conducted on 15 men and women aged 20 to 45, who inhaled the aerosol generated by the vaporizer and rated the preference for the scent of the inhaled aerosol on a scale of 1 to 5. Table 2 below shows the average values of the sensory evaluation scores.

**[Table 2]**

| olymer resin | Polymer resin content (weight%) | Content of stability-enhancing material (weight%) | Monomer 1,2-bond ratio | Sensory evaluation (Symbolic) |
|---|---|---|---|---|
| PCTG | 99 | 1 | Less than 70% | 2.62 |
| PCTG | 99 | 1 | 70% or more | 3.12 |

Referring to Table 2, it may be confirmed that when 70% or more of the monomer units of polybutadiene have a 1,2-structure, it had a higher preference than when less than 70% of the monomer units of polybutadiene have a 1,2-structure. This is expected to be because the loss of volatile fragrance is relatively small. Accordingly, it was confirmed that when 70% or more of the monomer units are included in the plastic of polybutadiene having a 1,2-structure, the fragrance may be stored more stably.

An aerosol-generating apparatus including a vaporizer according to another embodiment and an aerosol-generating article that may be used with the aerosol-generating apparatus are described below.

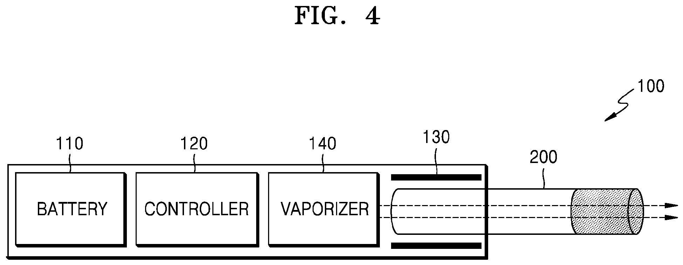

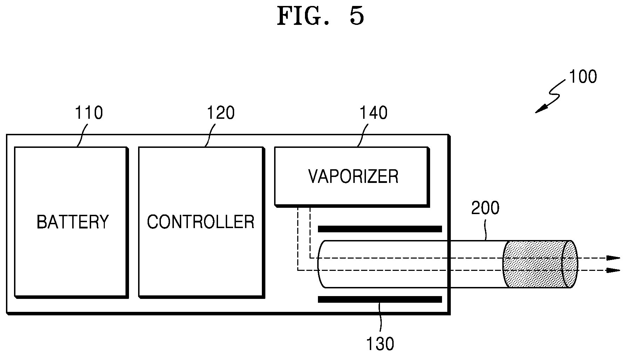

FIGS. 4 and 5 are diagrams showing examples in which an aerosol generating article is inserted into an aerosol generating device.

Referring to FIGS. 4 and 5, the aerosol generating device 100 may include a battery 110, a controller 120, a heater 130, and a vaporizer 140. Also, the aerosol generating article 200 may be inserted into an inner space of the aerosol generating device 100.

The aerosol generating device 100 illustrated in FIGS. 4 and 5 includes the vaporazer. However, the embodiments are not limited to the implementation method thereof, and the vaporizer may be omitted. In case the vaporizer is omitted from the aerosol generating device 100, the aerosol generating article 200 contains an aerosol generating material, so that the aerosol generating article 200 generates aerosol when the aerosol generating article 200 is heated by the heater 130.

FIGS. 4 and 5 illustrate components of the aerosol generating device 100, which are related to the present embodiment. Therefore, it will be understood by one of ordinary skill in the art related to the present embodiment that other general-purpose components may be further included in the aerosol generating device 100, in addition to the components illustrated in FIGS. 4 and 5.

Also, FIGS. 4 and 5 illustrate that the aerosol generating device 100 includes the heater 130. However, as necessary, the heater 130 may be omitted.

FIG. 4 illustrates that the battery 110, the controller 120, the vaporizer 140, and the heater 130 are arranged in series. Also, FIG. 5 illustrates that the vaporizer 140 and the heater 130 are arranged in parallel. However, the internal structure of the aerosol generating device 100 is not limited to the structures illustrated in FIGS. 4 or 5. In other words, according to the design of the aerosol generating device 100, the battery 110, the controller 120, the vaporizer 140, and the heater 130 may be differently arranged.

When the aerosol generating article 200 is inserted into the aerosol generating device 100, the aerosol generating device 100 may operate the vaporizer 140 to generate aerosol from the vaporizer 140. The aerosol generated by the vaporizer 140 is delivered to a user by passing through the aerosol generating article 200. The vaporizer 140 will be described in more detail later.

The battery 110 may supply power to be used for the aerosol generating device 100 to operate. For example, the battery 110 may supply power to heat the heater 130 or the vaporizer 140, and may supply power for operating the controller 120. Also, the battery 110 may supply power for operations of a display, a sensor, a motor, etc. mounted in the aerosol generating device 100.

The controller 120 may generally control operations of the aerosol generating device 100. In detail, the controller 120 may control not only operations of the battery 110, the heater 130, and the vaporizer 140, but also operations of other components included in the aerosol generating device 100. Also, the controller 120 may check a state of each of the components of the aerosol generating device 100 to determine whether or not the aerosol generating device 100 is able to operate.

The controller 120 may include at least one processor. A processor can be implemented as an array of a plurality of logic gates or can be implemented as a combination of a general-purpose microprocessor and a memory in which a program executable in the microprocessor is stored. It will be understood by one of ordinary skill in the art that the processor can be implemented in other forms of hardware.

The heater 130 may be heated by the power supplied from the battery 110. For example, when the aerosol generating article 200 is inserted into the aerosol generating device 100, the heater 130 may be located outside the aerosol generating article 200. Thus, the heated heater 130 may increase a temperature of an aerosol generating material in the aerosol generating article 200.

The heater 130 may include an electro-resistive heater. For example, the heater 130 may include an electrically conductive track, and the heater 130 may be heated when currents flow through the electrically conductive track. However, the heater 130 is not limited to the example described above and may include any other heaters which may be heated to a desired temperature. Here, the desired temperature may be pre-set in the aerosol generating device 100 or may be set by a user.

As another example, the heater 130 may include an induction heater. In detail, the heater 130 may include an electrically conductive coil for heating an aerosol generating article in an induction heating method, and the aerosol generating article may include a susceptor which may be heated by the induction heater.

FIG. 4 and 5 illustrate that the heater 130 is positioned outside the aerosol generating article 200, but the position of the heater 130 is not limited thereto. For example, the heater 130 may include a tube-type heating element, a plate-type heating element, a needle-type heating element, or a rod-type heating element, and may heat the inside or the outside of the aerosol generating article 200, according to the shape of the heating element.

Also, the aerosol generating device 100 may include a plurality of heaters 130. Here, the plurality of heaters 130 may be inserted into the aerosol generating article 200 or may be arranged outside the aerosol generating article 200. Also, some of the plurality of heaters 130 may be inserted into the aerosol generating article 200 and the others may be arranged outside the aerosol generating article 200. In addition, the shape of the heater 130 is not limited to the shapes illustrated in FIGS. 4 and 5 and may include various shapes.

The vaporizer 140 may generate aerosol by heating a liquid composition and the generated aerosol may pass through the aerosol generating article 200 to be delivered to a user. In other words, the aerosol generated via the vaporizer 140 may move along an air flow passage of the aerosol generating device 100 and the air flow passage may be configured such that the aerosol generated via the vaporizer 140 passes through the aerosol generating article 200 to be delivered to the user.

For example, the vaporizer 140 may include a liquid storage, a liquid delivery element, and a heating element, but it is not limited thereto. For example, the liquid storage, the liquid delivery element, and the heating element may be included in the aerosol generating device 100 as independent modules.

The liquid storage may store a liquid composition. For example, the liquid composition may be a liquid including a tobacco-containing material having a volatile tobacco flavor component, or a liquid including a non-tobacco material. The liquid storage may be formed to be detachable from the vaporizer 140 or may be formed integrally with the vaporizer 140.

For example, the liquid composition may include water, a solvent, ethanol, plant extract, spices, flavorings, or a vitamin mixture. The spices may include menthol, peppermint, spearmint oil, and various fruit-flavored ingredients, but are not limited thereto. The flavorings may include ingredients capable of providing various flavors or tastes to a user. Vitamin mixtures may be a mixture of at least one of vitamin A, vitamin B, vitamin C, and vitamin E, but are not limited thereto. Also, the liquid composition may include an aerosol forming substance, such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element is an element for heating the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosol may be generated.

For example, the vaporizer 140 may be referred to as a cartomizer or an atomizer, but it is not limited thereto.

The aerosol generating device 100 may further include general-purpose components in addition to the battery 110, the controller 120, the heater 130, and the vaporizer 140. For example, the aerosol generating device 100 may include a display capable of outputting visual information and/or a motor for outputting haptic information. Also, the aerosol generating device 100 may include at least one sensor (a puff sensor, a temperature sensor, an aerosol generating article insertion detecting sensor, etc.). Also, the aerosol generating device 100 may be formed as a structure that, even when the aerosol generating article 200 is inserted into the aerosol generating device 100, may introduce external air or discharge internal air.

Although not illustrated in FIGS. 4 and 5, the aerosol generating device 100 and an additional cradle may form together a system. For example, the cradle may be used to charge the battery 110 of the aerosol generating device 100. Alternatively, the heater 130 may be heated when the cradle and the aerosol generating device 100 are coupled to each other.

The aerosol generating article 200 may be similar to a general combustive cigarette. For example, the aerosol generating article 200 may be divided into a first portion including an aerosol generating material and a second portion including a filter, etc. Alternatively, the second portion of the aerosol generating article 200 may also include an aerosol generating material. For example, an aerosol generating material made in the form of granules or capsules may be inserted into the second portion.

The first portion may be completely inserted into the aerosol generating device 100, and the second portion may be exposed to the outside. Alternatively, only a portion of the first portion may be inserted into the aerosol generating device 100, or a portion of the first portion and a portion of the second portion may be inserted thereinto. The user may puff aerosol while holding the second portion by the mouth of the user. In this case, the aerosol is generated by the external air passing through the first portion, and the generated aerosol passes through the second portion and is delivered to the user's mouth.

For example, the external air may flow into at least one air passage formed in the aerosol generating device 100. For example, opening and closing of the air passage and/or a size of the air passage formed in the aerosol generating device 100 may be adjusted by the user. Accordingly, the amount and the quality of smoking may be adjusted by the user. As another example, the external air may flow into the aerosol generating article 200 through at least one hole formed in a surface of the aerosol generating article 200.

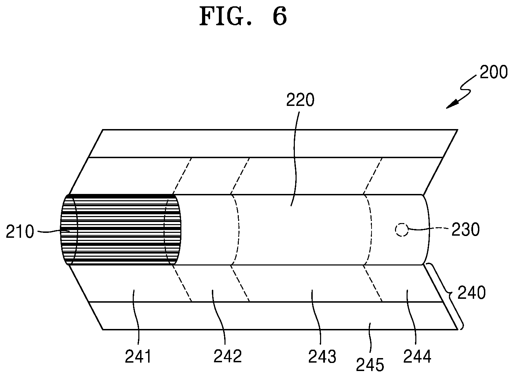

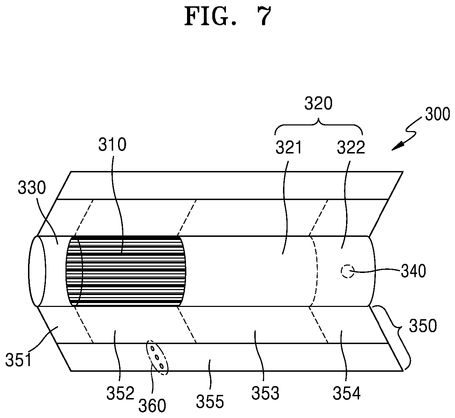

Hereinafter, the examples of the aerosol generating article 200 will be described with reference to FIGS. 6 and 7.

FIGS. 6 and 7 illustrate examples of the aerosol generating article.

Referring to FIG. 6, the aerosol generating article 200 includes a tobacco rod 210 and a filter rod 220. The first portion described above with reference to FIGS. 4 and 5 may include the tobacco rod 210, and the second portion may include the filter rod 220.

FIG. 6 illustrates that the filter rod 220 includes a single segment, but is limited thereto. In other words, the filter rod 220 may include a plurality of segments. For example, the filter rod 220 may include a first segment configured to cool an aerosol and a second segment configured to filter a certain component included in the aerosol. Also, as necessary, the filter rod 220 may further include at least one segment configured to perform other functions.

The aerosol generating article 200 may be packaged by at least one wrapper 240. The wrapper 240 may have at least one hole through which external air may be introduced or internal air may be discharged. For example, the aerosol generating article 200 may be packaged by one wrapper 240. As another example, the aerosol generating article 200 may be doubly packaged by two or more wrappers 240. For example, the tobacco rod 210 may be packaged by a first wrapper 241, and the filter rod 220 may be packaged by wrappers 242, 243, 244. Also, the entire aerosol generating article 200 may be repackaged by another single wrapper 245. When the filter rod 220 includes a plurality of segments, each segment may be packaged by wrappers 242, 243, 244.

The tobacco rod 210 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 210 may include other additives, such as flavors, a wetting agent, and/or organic acid. Also, the tobacco rod 210 may include a flavored liquid, such as menthol or a moisturizer, which is injected to the tobacco rod 210.

The tobacco rod 210 may be manufactured in various forms. For example, the tobacco rod 210 may be formed as a sheet or a strand. Also, the tobacco rod 210 may be formed as a pipe tobacco, which is formed of tiny bits cut from a tobacco sheet. Also, the tobacco rod 210 may be surrounded by a heat conductive material. For example, the heat conductive material may be, but is not limited to, a metal foil such as aluminum foil. For example, the heat conductive material surrounding the tobacco rod 210 may uniformly distribute heat transmitted to the tobacco rod 210, and thus, the heat conductivity applied to the tobacco rod may be increased and taste of the tobacco may be improved. Also, the heat conductive material surrounding the tobacco rod 210 may function as a susceptor heated by the induction heater. Here, although not illustrated in the drawings, the tobacco rod 210 may further include an additional susceptor, in addition to the heat conductive material surrounding the tobacco rod 210.

The filter rod 220 may include a cellulose acetate filter. Shapes of the filter rod 220 are not limited. For example, the filter rod 220 may include a cylinder-type rod or a tube-type rod having a hollow inside. Also, the filter rod 220 may include a recess-type rod. When the filter rod 220 includes a plurality of segments, at least one of the plurality of segments may have a different shape.

The filter rod 220 may be formed to generate flavors. For example, a flavoring liquid may be injected onto the filter rod 220, or an additional fiber coated with a flavoring liquid may be inserted into the filter rod 220.

Also, the filter rod 220 may include at least one capsule 230. Here, the capsule 230 may generate a flavor or an aerosol. For example, the capsule 230 may have a configuration in which a liquid containing a flavoring material is wrapped with a film. For example, the capsule 230 may have a spherical or cylindrical shape, but is not limited thereto.

When the filter rod 220 includes a segment configured to cool the aerosol, the cooling segment may include a polymer material or a biodegradable polymer material. For example, the cooling segment may include pure polylactic acid alone, but the material for forming the cooling segment is not limited thereto. In some embodiments, the cooling segment may include a cellulose acetate filter having a plurality of holes. However, the cooling segment is not limited to the above-described example and is not limited as long as the cooling segment cools the aerosol.

Referring to FIG. 7, the aerosol generating article 300 may further include a front-end plug 330. The front-end plug 330 may be located on one side of the tobacco rod 310 which is opposite to the filter rod 320. The front-end plug 330 may prevent the tobacco rod 310 from being detached outwards and prevent the liquefied aerosol from flowing from the tobacco rod 310 into the aerosol generating device (100 of FIGS. 4 and 5), during smoking.

The filter rod 320 may include a first segment 321 and a second segment 322. Here, the first segment 321 may correspond to the first segment of the filter rod 220 of FIG. 6, and the second segment 322 may correspond to the third segment of the filter rod 220 of FIG. 6.

A diameter and a total length of the aerosol generating article 300 may correspond to a diameter and a total length of the aerosol generating article 200 of FIG. 6. For example, the length of the front-end plug 330 is about 7 mm, the length of the tobacco rod 310 is about 15 mm, the length of the first segment 321 is about 12 mm, and the length of the second segment 322 is about 14 mm, but it is not limited thereto.

The aerosol generating article 300 may be packaged using at least one wrapper 350. The wrapper 350 may have at least one hole through which external air may be introduced or internal air may be discharged. For example, the front end plug 330 may be packaged by a first wrapper 351, the tobacco rod 310 may be packaged by a second wrapper 352, the first segment 321 may be packaged by a third wrapper 353, and the second segment 322 may be packaged by a fourth wrapper 354.

Further, the entire aerosol generating article 300 may be repackaged by a fifth wrapper 355. In addition, at least one perforation 360 may be formed in the fifth wrapper 355. For example, the perforation 360 may be formed in a region surrounding the tobacco rod 310, but is not limited thereto. The perforation 360 may serve to transfer heat generated by the heater 130 illustrated in FIGS. 5 and 6 to the inside of the tobacco rod 310.

In addition, at least one capsule 340 may be included in the second segment 322. Here, the capsule 340 may generate a flavor or an aerosol. For example, the capsule 340 may have a configuration in which a liquid containing a flavoring material is wrapped with a film. For example, the capsule 340 may have a spherical or cylindrical shape, but is not limited thereto.

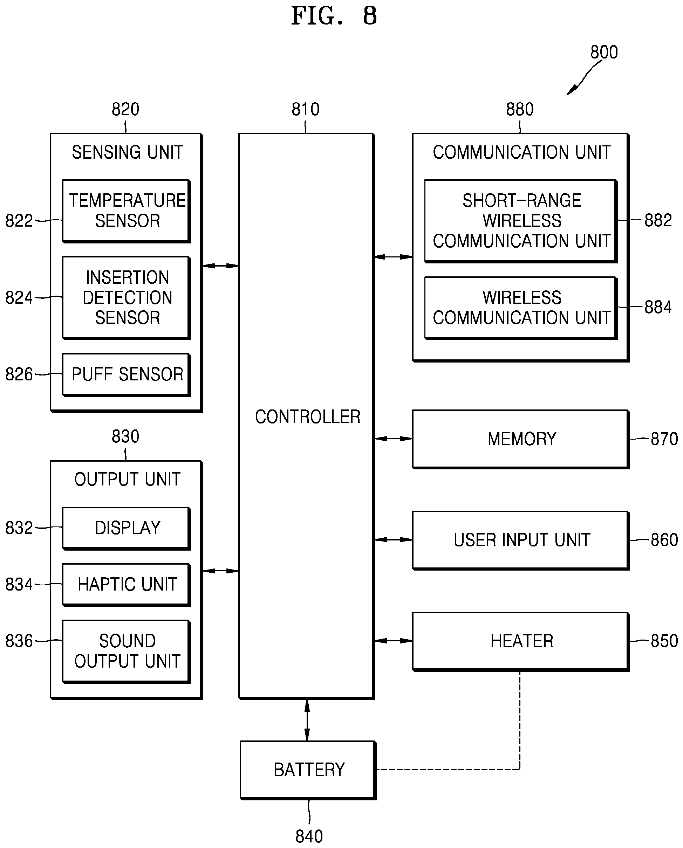

FIG. 8 is a block diagram of an aerosol generating device 800 according to another embodiment.

The aerosol generating device 800 may include a controller 810, a sensing unit 820, an output unit 830, a battery 840, a heater 850, a user input unit 860, a memory 870, and a communication unit 880. However, the internal structure of the aerosol generating device 800 is not limited to those illustrated in FIG. 8. That is, according to the design of the aerosol generating device 800, it will be understood by one of ordinary skill in the art that some of the components shown in FIG. 8 may be omitted or new components may be added.

The sensing unit 820 may sense a state of the aerosol generating device 800 and a state around the aerosol generating device 800, and transmit sensed information to the controller 810. Based on the sensed information, the controller 810 may control the aerosol generating device 800 to perform various functions, such as controlling an operation of the heater 850, limiting smoking, determining whether an aerosol generating article (e.g., a cigarette, a cartridge, or the like) is inserted, displaying a notification, or the like.

The sensing unit 820 may include at least one of a temperature sensor 822, an insertion detection sensor, and a puff sensor 826, but is not limited thereto.

The temperature sensor 822 may sense a temperature at which the heater 850 (or an aerosol generating material) is heated. The aerosol generating device 800 may include a separate temperature sensor for sensing the temperature of the heater 850, or the heater 850 may serve as a temperature sensor. Alternatively, the temperature sensor 822 may also be arranged around the battery 840 to monitor the temperature of the battery 840.

The insertion detection sensor 824 may sense insertion and/or removal of an aerosol generating article. For example, the insertion detection sensor 824 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 826 may sense a user's puff on the basis of various physical changes in an airflow passage or an airflow channel. For example, the puff sensor 826 may sense a user's puff on the basis of any one of a temperature change, a flow change, a voltage change, and a pressure change.

The sensing unit 820 may include, in addition to the temperature sensor 822, the insertion detection sensor 824, and the puff sensor 826 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 830 may output information on a state of the aerosol generating device 800 and provide the information to a user. The output unit 830 may include at least one of a display unit 832, a haptic unit 834, and a sound output unit 836, but is not limited thereto. When the display unit 832 and a touch pad form a layered structure to form a touch screen, the display unit 832 may also be used as an input device in addition to an output device.

The display unit 832 may visually provide information about the aerosol generating device 800 to the user. For example, information about the aerosol generating device 800 may mean various pieces of information, such as a charging/discharging state of the battery 840 of the aerosol generating device 800, a preheating state of the heater 850, an insertion/removal state of an aerosol generating article, or a state in which the use of the aerosol generating device 800 is restricted (e.g., sensing of an abnormal object), or the like, and the display unit 832 may output the information to the outside. The display unit 832 may be, for example, a liquid crystal display panel (LCD), an organic light-emitting diode (OLED) display panel, or the like. In addition, the display unit 832 may be in the form of a light-emitting diode (LED) light-emitting device.

The haptic unit 834 may tactilely provide information about the aerosol generating device 800 to the user by converting an electrical signal into a mechanical stimulus or an electrical stimulus. For example, the haptic unit 834 may include a motor, a piezoelectric element, or an electrical stimulation device.

The sound output unit 836 may audibly provide information about the aerosol generating device 800 to the user. For example, the sound output unit 836 may convert an electrical signal into a sound signal and output the same to the outside.

The battery 840 may supply power used to operate the aerosol generating device 800. The battery 840 may supply power such that the heater 850 may be heated. In addition, the battery 840 may supply power required for operations of other components (e.g., the sensing unit 820, the output unit 830, the user input unit 860, the memory 870, and the communication unit 880) in the aerosol generating device 800. The battery 840 may be a rechargeable battery or a disposable battery. For example, the battery 840 may be a lithium polymer (LiPoly) battery, but is not limited thereto.

The heater 850 may receive power from the battery 840 to heat an aerosol generating material. Although not illustrated in FIG. 8, the aerosol generating device 800 may further include a power conversion circuit (e.g., a direct current (DC)/DC converter) that converts power of the battery 840 and supplies the same to the heater 850. In addition, when the aerosol generating device 800 generates aerosols in an induction heating method, the aerosol generating device 800 may further include a DC/alternating current (AC) converter that converts DC power of the battery 840 into AC power.

The controller 810, the sensing unit 820, the output unit 830, the user input unit 860, the memory 870, and the communication unit 880 may each receive power from the battery 840 to perform a function. Although not illustrated in FIG. 8, the aerosol generating device 800 may further include a power conversion circuit that converts power of the battery 840 to supply the power to respective components, for example, a low dropout (LDO) circuit, or a voltage regulator circuit.

In an embodiment, the heater 850 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 850 may be implemented by a metal wire, a metal plate on which an electrically conductive track is arranged, a ceramic heating element, or the like, but is not limited thereto.

In another embodiment, the heater 850 may be a heater of an induction heating type. For example, the heater 850 may include a susceptor that heats an aerosol generating material by generating heat through a magnetic field applied by a coil.

The user input unit 860 may receive information input from the user or may output information to the user. For example, the user input unit 860 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 8, the aerosol generating device 800 may further include a connection interface, such as a universal serial bus (USB) interface, and may connect to other external devices through the connection interface, such as the USB interface, to transmit and receive information, or to charge the battery 840.

The memory 870 is a hardware component that stores various types of data processed in the aerosol generating device 800, and may store data processed and data to be processed by the controller 810. The memory 870 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 870 may store an operation time of the aerosol generating device 800, the maximum number of puffs, the current number of puffs, at least one temperature profile, data on a user's smoking pattern, etc.

The communication unit 880 may include at least one component for communication with another electronic device. For example, the communication unit 880 may include a short-range wireless communication unit 882 and a wireless communication unit 884.

The short-range wireless communication unit 882 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 884 may include a cellular network communication unit, an Internet communication unit, a computer network (e.g., local area network (LAN) or wide area network (WAN)) communication unit, or the like, but is not limited thereto. The wireless communication unit 884 may also identify and authenticate the aerosol generating device 800 within a communication network by using subscriber information (e.g., International Mobile Subscriber Identifier (IMSI)).

The controller 810 may control general operations of the aerosol generating device 800. In an embodiment, the controller 810 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 810 may control the temperature of the heater 850 by controlling supply of power of the battery 840 to the heater 850. For example, the controller 810 may control power supply by controlling switching of a switching element between the battery 840 and the heater 850. In another example, a direct heating circuit may also control power supply to the heater 850 according to a control command of the controller 810.

The controller 810 may analyze a result sensed by the sensing unit 820 and control subsequent processes to be performed. For example, the controller 810 may control power supplied to the heater 850 to start or end an operation of the heater 850 on the basis of a result sensed by the sensing unit 820. As another example, the controller 810 may control, based on a result sensed by the sensing unit 820, an amount of power supplied to the heater 850 and the time the power is supplied, such that the heater 850 may be heated to a certain temperature or maintained at an appropriate temperature.

The controller 810 may control the output unit 830 on the basis of a result sensed by the sensing unit 820. For example, when the number of puffs counted through the puff sensor 826 reaches a preset number, the controller 810 may notify the user that the aerosol generating device 800 will soon be terminated through at least one of the display unit 832, the haptic unit 834, and the sound output unit 836.

One embodiment may also be implemented in the form of a computer-readable recording medium including instructions executable by a computer, such as a program module executable by the computer. The computer-readable recording medium may be any available medium that may be accessed by a computer and includes both volatile and nonvolatile media, and removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

The descriptions of the above-described embodiments are merely examples, and it will be understood by one of ordinary skill in the art that various changes and equivalents thereof may be made. Therefore, the scope of the disclosure should be defined by the appended claims, and all differences within the scope equivalent to those described in the claims will be construed as being included in the scope of protection defined by the claims.

## Claims

1. A vaporizer comprising:
a storage portion storing an aerosol-generating material; and
a heating element configured to heat the aerosol-generating material,
wherein the storage portion comprises a plastic including a polymer resin
and a stability-enhancing material.

2. The vaporizer of claim 1, wherein
the polymer resin comprises at least one polymer resin selected from the group consisting of PCTG (polycyclohexylenedimethylene terephthalate glycol), PETG (polyethylene glycol-co-1,4-cyclohexanedimethanol terephthalate), SAN (styrene-acrylonitrile), PMMA (poly(methyl methacrylate)), and PS (polystyrene).

3. The vaporizer of claim 1, wherein
the stability-enhancing material comprises a vaporizer including polybutadiene.

4. The vaporizer of claim 3, wherein
the polybutadiene includes 70% or more of monomer units thereof having a 1,2-structure.

5. The aerosol-generating apparatus of claim 1, wherein
the plastic includes 0.1 to 5 wt% of the stability-enhancing material based on the total weight of the plastic.

6. The vaporizer of claim 1, wherein
the plastic further comprises biomass.

7. The vaporizer of claim 1, wherein
the aerosol-generating material further comprises a fragrance.

8. An aerosol-generating apparatus comprising:
a vaporizer comprising a storage portion storing an aerosol-generating material and a heating element configured to heat the aerosol-generating material; and
a controller configured to control power supplied to the heating element,
wherein the storage portion comprises a plastic including a polymer resin and a stability-enhancing material.

9. The aerosol-generating apparatus of claim 8, further comprising:
a housing comprising a space accommodating an aerosol-generating article; and
a heater configured to heat the aerosol-generating article accommodated in the housing.

10. The aerosol-generating apparatus of claim 8, wherein
the plastic comprises at least one plastic selected from the group consisting of PCTG (polycyclohexylenedimethylene terephthalate glycol), PETG (polyethylene glycol-co-1,4-cyclohexanedimethanol terephthalate), SAN (styrene-acrylonitrile), PMMA (poly(methyl methacrylate)), and PS (polystyrene).

11. The aerosol-generating apparatus of claim 8, wherein
the stability-enhancing material comprises polybutadiene.

12. The aerosol-generating apparatus of claim 11, wherein
the polybutadiene includes 70% or more of monomer units thereof having a 1,2-structure.

13. The aerosol-generating apparatus of claim 8, wherein
the plastic includes 0.1 to 5 wt% of the stability-enhancing material based on the total weight of the plastic.

14. The aerosol-generating apparatus of claim 8, wherein
the plastic further comprises biomass.

15. The aerosol-generating apparatus of claim 8, wherein
the aerosol-generating material further comprises a fragrance.
